# EUROPEAN PATENT SPECIFICATION

(11) **EP 2 944 788 B1**
(45) Date of publication and mention of the grant of the patent: **22.02.2017**
(21) Application number: 15166888.6
(22) Date of filing: 08.05.2015
(51) Int. Cl.: F02B 37/18, F16K 31/10, F16K 31/04, F16K 31/52, F16K 37/00

(54) **MOUNTING STRUCTURE, DETECTING DEVICE WITH LINK MECHANISM INCLUDING MOUNTING STRUCTURE, AND POSITION DETECTING DEVICE TO WHICH LINK MECHANISM IS CONNECTED**
MONTAGESTRUKTUR, ERKENNUNGSVORRICHTUNG MIT VERBINDUNGSMECHANISMUS MIT MONTAGESTRUKTUR UND POSITIONSERKENNUNGSVORRICHTUNG, MIT WELCHER DER VERBINDUNGSMECHANISMUS VERBUNDEN IST
STRUCTURE DE MONTAGE, DISPOSITIF DE DÉTECTION AVEC MÉCANISME DE LIAISON COMPRENANT UNE STRUCTURE DE MONTAGE ET DISPOSITIF DE DÉTECTION DE POSITION À LAQUELLE LE MÉCANISME DE LIAISON EST RELIÉ

(30) Priority: 13.05.2014 JP 2014099499
(43) Date of publication of application: 18.11.2015
(73) Proprietor: Alps Electric Co., Ltd., Tokyo 145-8501 (JP)
(72) Inventor: Yuji, Kodama, Tokyo, Tokyo 145-8501 (JP)
(74) Representative: Klunker . Schmitt-Nilson . Hirsch

(56) References cited:
- JP-A- 2012 013 180
- JP-A- 2013 210 101
- US-A1- 2012 001 104
- US-A1- 2012 001 111

## Description

### BACKGROUND OF THE INVENTION

### 1. Field of the Invention

The present invention relates to a mounting structure of a link mechanism, and more particularly, to a detecting device with a link mechanism including a mounting structure and a position detecting device to which the link mechanism is connected.

### 2. Description of the Related Art

A link mechanism including a lever, which rotates about a rotation center shaft provided at one end thereof, and a rod, which is engaged with the other end of the lever and reciprocates, is used for various purposes, such as a simple jig or a complicated machine. In particular, the link mechanism is suitably used for a crank, a connecting rod, a piston, and the like in an internal combustion engine.

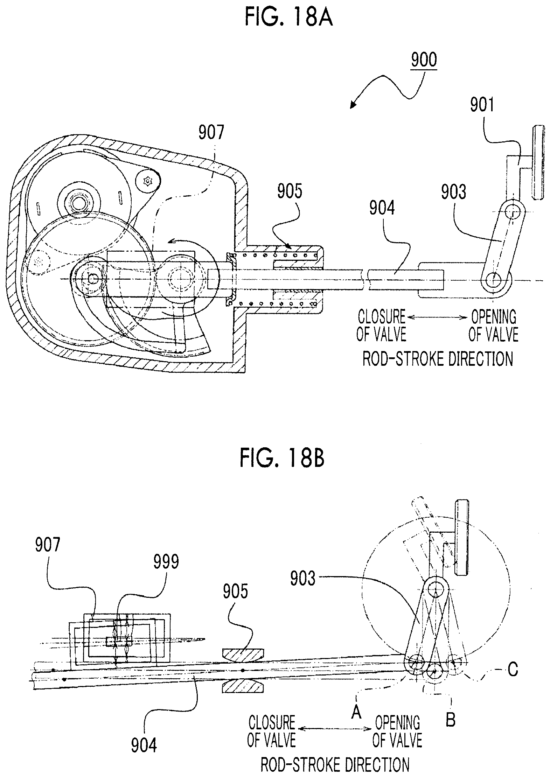

A waste gate valve control device 900, in which a link mechanism including a link lever 903 and a rod 904 is used, is proposed as the related art in Japanese Unexamined Patent Application Publication No. 2012-132554. Figs. 18A and 18B are views showing the waste gate valve control device 900, in which Fig. 18A is a side view of the waste gate valve control device 900 and Fig. 18B is a view showing the link mechanism used in the waste gate valve control device 900.

The waste gate valve control device 900 shown in Fig. 18A includes a waste gate valve 901 that rotates about a rotation center shaft, a rod 904 that drives a waste gate valve 901, a link lever 903 that connects the waste gate valve 901 with the rod 904, a magnetic moving body 907 that is installed integrally with the rod 904 and includes a magnet generating a magnetic field having constant magnetic flux density, and a stroke sensor 999 that detects the movement of the magnetic moving body 907.

The link mechanism used in the waste gate valve control device 900 is adapted so that the link lever 903 and the rod 904 are connected to each other so as to be orthogonal to each other and form a neutral point as shown in Fig. 18B. Further, as the waste gate valve 901 is driven, the link lever 903 rotates while drawing an arc extending to a fully opened opening point (a point C shown in Fig. 18B) from a fully closed opening point (a point A shown in Fig. 18B) via an intermediate opening point (a neutral point) (a point B shown in Fig. 18B). Further, as the link lever 903 rotates, the rod 904 is supported by a thrust bearing 905 and reciprocates while inclined.

However, in the link mechanism in the related art, the rod 904 is inclined with the rotation of the link lever 903 and the rod 904 becomes excessively eccentric with the reciprocation of the rod 904. In particular, when the stroke of the rod 904 is detected by using the contactless stroke sensor 999 in the related art, the eccentricity of the rod 904 causes the interval between the stroke sensor 999 and the rod 904 to vary. For this reason, there is a problem in that the detection accuracy of the stroke sensor 999 deteriorates. As the eccentricity is increased, an adverse effect on the detection accuracy of the stroke sensor 999 is increased.

A further example of a link mechanism is shown in document US 2012 000 1111 A.

### SUMMARY OF THE INVENTION

The invention provides a mounting structure that can suppress the oscillation of a driven body engaged with one end of a rod, a detecting device with a link mechanism including the mounting structure, and a position detecting device to which the link mechanism is connected.

According to an aspect of the invention, there is provided a mounting structure including: a lever that includes an oscillation shaft at one end thereof and oscillates in a predetermined oscillating angle range; a rod of which one end is engaged with a driven body; and a support that is disposed on an intermediate portion of the rod and supports the rod so as to allow the rod to reciprocate. The other end of the lever and the other end of the rod are movably connected to each other by a connecting shaft that is spaced apart from the oscillation shaft by a predetermined distance. An arc endpoint of an arc, which is drawn by the connecting shaft with the oscillation of the lever, close to the support is defined as a first arc endpoint and an arc endpoint of the arc distant from the support is defined as a second arc endpoint. A line segment connecting the oscillation shaft with the connecting shaft is defined as a lever axis. When a line extending toward the lever axis from a fulcrum serving as a support center of the support means an oscillating angle of the lever corresponding to a line perpendicular to the lever axis, the line perpendicular to the lever axis is defined as a perpendicular line segment and the lever axis is defined as a lever line segment. A connection point between the lever line segment and the arc is defined as an arc intermediate point. A line connecting the fulcrum with the arc intermediate point is defined as an intermediate line, a line connecting the fulcrum with the first arc endpoint is defined as a first line segment, and a line connecting the fulcrum with the second arc endpoint is defined as a second line segment. An angle between the intermediate line and the perpendicular line segment is defined as an intermediate angle, an angle formed between the first line segment and the perpendicular line segment is defined as a first angle, and an angle between the second line segment and the perpendicular line segment is defined as a second angle. The lever and the rod are connected to each other so that the intermediate angle is equal to or greater than a larger one of the first angle and the second angle.

Accordingly, the mounting structure according to the aspect of the invention can reduce the deflection angle of the rod about a fulcrum of the rod, which is supported by the support, in the oscillating angle range of the lever. For this reason, it is possible to suppress the oscillation of the driven body that is engaged with one end of the rod. Accordingly, it is possible to reduce the trouble of the driven body that is caused by the excessive oscillation of the driven body.

Further, in the mounting structure according to the aspect of the invention, the support may be a thrust bearing.

Accordingly, the rod can obliquely move and reciprocate without the generation of abnormal noises or the shortening of the life of the thrust bearing when the rod moves. Therefore, the driven body is stably driven.

Furthermore, according to another aspect of the invention, there is provided a detecting device with a link mechanism including: a link mechanism that includes the mounting structure according to the above-mentioned aspects; and a detecting device that is connected to the link mechanism. The detecting device includes the driven body that reciprocates together with the rod of the link mechanism, a movable magnet that reciprocates together with the driven body, and detecting means for detecting an operation of the movable magnet.

Accordingly, since the detecting device includes the link mechanism that can reduce the deflection angle of the rod about the fulcrum and the detecting device that is connected to the link mechanism, the deflection of the reciprocation of the driven body of the detecting device is small when the rod reciprocates. For this reason, since it is possible to reduce the variation of the interval between the movable magnet and the detecting means when the rod reciprocates, it is possible to suppress the deterioration of the detection accuracy of the detecting means that is caused by an influence of the deflection of reciprocation. Therefore, it is possible to provide the detecting device with the link mechanism of which the deterioration of the detection accuracy has been suppressed.

Further, in the detecting device with a link mechanism according to the aspect of the invention, the detecting means may detect a degree of an operation of the movable magnet in a reciprocation direction of the movable magnet and an interval direction between the detecting means and the movable magnet.

Accordingly, it is possible to more accurately detect the operation of the movable magnet. Therefore, it is possible to improve position-detection accuracy.

Furthermore, in the detecting device with a link mechanism according to the aspect of the invention, a partition wall may be provided between the movable magnet and the detecting means.

Accordingly, the space in which the movable magnet is disposed and the space in which the detecting means is disposed are isolated from each other. Accordingly, even though an environmental change occurs in the space in which the rod is disposed, it is possible to reduce an influence on the detecting means.

Moreover, according to still another aspect of the invention, there is provided a position detecting device to which a link mechanism including the mounting structure according to the above-mentioned aspects is connected. The position detecting device includes the driven body that is engaged with the rod of the link mechanism and reciprocates together with the rod, a movable magnet that operates together with the driven body, and detecting means for detecting an operation of the movable magnet.

Accordingly, since the driven body operating the movable magnet is engaged with the link mechanism that can reduce the deflection angle of the rod about the fulcrum, the deflection of the reciprocation of the driven body of the position detecting device is small when the rod reciprocates. For this reason, since it is possible to reduce the variation of the interval between the movable magnet and the detecting means when the rod reciprocates, it is possible to suppress the deterioration of the detection accuracy of the detecting means that is caused by an influence of the deflection of reciprocation. Therefore, it is possible to provide the position detecting device of which the deterioration of the detection accuracy has been suppressed.

Further, in the position detecting device according to the aspect of the invention, an interval between the movable magnet and the detecting means may be changed with the reciprocation of the movable magnet, and the detecting means may be disposed at a position where an interval between a position of the movable magnet corresponding to a larger one of the first and second angles and the detecting means is the same as an interval between the position of a movable magnet corresponding to the intermediate angle and the detecting means.

Accordingly, it is possible to reduce the variation of the interval between the movable magnet and the detecting means when the movable magnet reciprocates. Therefore, it is possible to further suppress the deterioration of the detection accuracy of the detecting means that is caused by an influence of the deflection of the movable magnet.

Furthermore, in the position detecting device according to the aspect of the invention, the detecting means may detect a degree of an operation of the movable magnet in a reciprocation direction of the movable magnet and an interval direction between the detecting means and the movable magnet.

Accordingly, it is possible to more accurately detect the operation of the movable magnet. Therefore, it is possible to improve position-detection accuracy.

Moreover, in the position detecting device according to the aspect of the invention, a partition wall may be provided between the movable magnet and the detecting means.

Accordingly, the space in which the movable magnet is disposed and the space in which the detecting means is disposed are isolated from each other. Therefore, even though an environmental change occurs in the space in which the rod is disposed, it is possible to reduce an influence on the detecting means.

The mounting structure according to the aspect of the invention can reduce the deflection angle of the rod about a fulcrum of the rod, which is supported by the support, in the oscillating angle range of the lever. For this reason, it is possible to suppress the oscillation of the driven body that is engaged with one end of the rod. Accordingly, it is possible to reduce the trouble of the driven body that is caused by the excessive oscillation of the driven body.

Further, since the detecting device with the link mechanism according to the aspect of the invention includes the link mechanism that can reduce the deflection angle of the rod about the fulcrum and the detecting device that is connected to the link mechanism, the deflection of the reciprocation of the driven body of the detecting device is small when the rod reciprocates. For this reason, since it is possible to reduce the variation of the interval between the movable magnet and the detecting means when the rod reciprocates, it is possible to suppress the deterioration of the detection accuracy of the detecting means that is caused by an influence of the deflection of reciprocation. Therefore, it is possible to provide the detecting device with the link mechanism of which the deterioration of the detection accuracy has been suppressed.

Furthermore, since the driven body, which operates the movable magnet, of the position detecting device according to the aspect of the invention is engaged with the link mechanism that can reduce the deflection angle of the rod about the fulcrum, the deflection of the reciprocation of the driven body of the position detecting device is small when the rod reciprocates. For this reason, since it is possible to reduce the variation of the interval between the movable magnet and the detecting means when the rod reciprocates, it is possible to suppress the deterioration of the detection accuracy of the detecting means that is caused by an influence of the deflection of reciprocation.

### BRIEF DESCRIPTION OF THE DRAWINGS

Fig. 1 is a side view of a mounting structure according to a first embodiment of the invention;
Fig. 2 is a view showing the mounting structure according to the first embodiment of the invention and is a view showing an example of a thrust bearing;
Fig. 3 is a view showing the mounting structure according to the first embodiment of the invention and is a side view schematically showing the motions of a lever and a rod;
Fig. 4 is an exploded perspective view of a position detecting device according to a second embodiment of the invention;
Fig. 5 is a perspective view of the position detecting device according to the second embodiment of the invention;
Fig. 6 is a side view of the position detecting device according to the second embodiment of the invention;
Fig. 7 is a top view of the position detecting device according to the second embodiment of the invention;
Fig. 8 is a view showing the position detecting device according to the second embodiment of the invention and is a cross-sectional view taken along line VIII-VIII shown in Fig. 7;
Fig. 9 is a view showing the operation of the position detecting device according to the second embodiment of the invention and is a cross-sectional view showing a state in which a movable magnet is moved up from a state of Fig. 8;
Fig. 10 is a view showing the operation of the movable magnet of the position detecting device according to the second embodiment of the invention;
Fig. 11 is an exploded perspective view of a detecting device with a link mechanism according to a third embodiment of the invention;
Fig. 12 is a side view of the link mechanism according to the third embodiment of the invention;
Fig. 13 is a perspective view of the detecting device with the link mechanism according to the third embodiment of the invention;
Fig. 14 is a side view of the detecting device with the link mechanism according to the third embodiment of the invention;
Fig. 15 is a top view of the detecting device with the link mechanism according to the third embodiment of the invention;
Fig. 16 is a view showing the detecting device with the link mechanism according to the third embodiment of the invention and is a cross-sectional view taken along line XVI-XVI shown in Fig. 15;
Fig. 17 is a view showing the operation of the detecting device with the link mechanism according to the third embodiment of the invention and is a cross-sectional view showing a state in which a movable magnet is moved up from a state of Fig. 16;
Figs. 18A to 18B are views showing a waste gate valve control device in the related art, in which Fig. 18A is a side view of the waste gate valve control device and Fig. 18B is a view showing a link mechanism used in the waste gate valve control device; and
Fig. 19 is a side view schematically showing the motions of a link lever and a rod of the waste gate valve control device in the related art.

### DESCRIPTION OF THE PREFERRED EMBODIMENTS

Embodiments of the invention will be described below with reference to the drawings.

### First embodiment

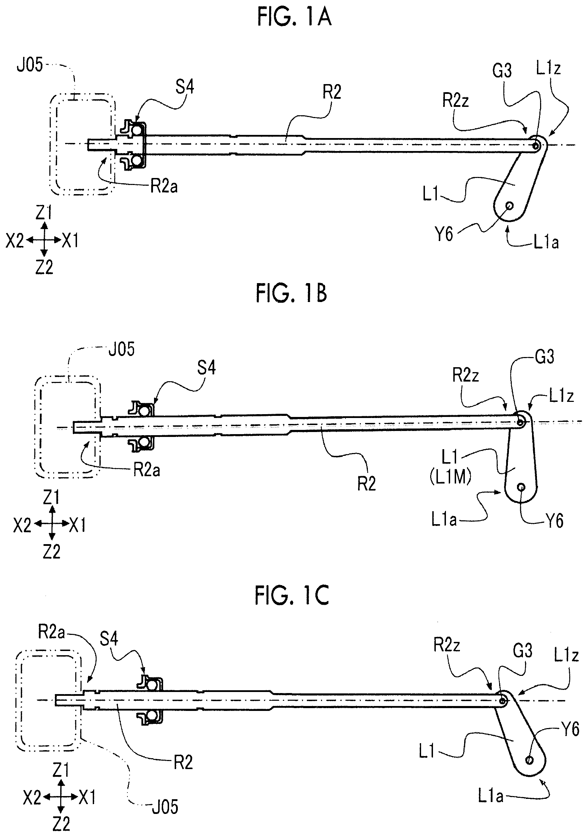

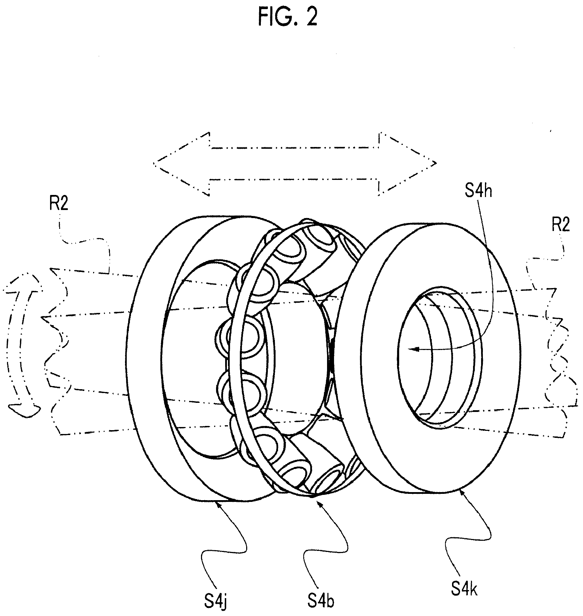

Fig. 1 is a side view of a mounting structure according to a first embodiment of the invention, in which Fig. 1A shows a state in which a lever L1 oscillates to the right side (an X1 side shown in Fig. 1), Fig. 1B shows a state in which the lever L1 is positioned at an intermediate portion, and Fig. 1C shows a state in which the lever L1 oscillates to the left side (an X2 side shown in Fig. 1). Fig. 2 is a view showing an example of a thrust bearing that is used in the mounting structure according to the first embodiment of the invention.

The mounting structure according to the first embodiment of the invention is used in an internal combustion engine of a vehicle or the like. As shown in Fig. 1, the mounting structure includes a lever L1 that oscillates in a predetermined oscillating angle range, a rod R2 of which one end R2a is engaged with a driven body J05, and a support S4 that supports the rod R2 so as to allow the rod R2 to reciprocate. Further, the mounting structure according to the first embodiment includes a link mechanism in which the other end L1z of the lever L1 and the other end R2z of the rod R2 are connected to each other by a connecting shaft G3 and which allows an oscillating operation of the lever L1 in a predetermined oscillating angle range and a linear operation (reciprocation) of the rod R2.

First, the lever L1 of the mounting structure is formed in the shape of a metal plate. As shown in Fig. 1, a through hole is formed at one end L1a (a Z2 side shown in Fig. 1) and an oscillation shaft body (not shown) including an oscillation shaft Y6 is inserted into the through hole. Accordingly, the lever L1 is adapted to oscillate about the oscillation shaft Y6 as an oscillation center in a predetermined oscillating angle range as shown in Figs. 1A to 1C. The lever L1 may be adapted so as to rotate about a rotating shaft as a rotation center at a predetermined rotation angle. Further, although not shown, another device is connected to the oscillation shaft body of the lever L1.

Further, a protrusion (not shown in detail), which extends from the body of the lever L1, is formed at the other end L1z (a Z1 side shown in Fig. 1) of the lever L1, and the rod R2 is loosely fitted to the protrusion. Accordingly, the lever L1 and the rod R2 are connected to each other at this portion. Furthermore, the connecting shaft G3, which is spaced apart from the oscillation shaft Y6 by a predetermined distance, passes through the protrusion, and the connecting shaft G3 draws an arc having a center on the oscillation shaft Y6 in side view with the oscillation of the lever L1.

Next, the rod R2 of the mounting structure is formed in the shape of a metal bar. As shown in Fig. 1, a through hole (which is not shown in detail) is formed at the other end R2z (the X1 side shown in Fig. 1) and the through hole and the protrusion of the lever L1 are connected to each other. Further, the oscillating operation of the lever L1 and the linear operation of the rod R2 can be performed as shown in Figs. 1A to 1C. Meanwhile, the range of the linear operation of the rod R2 corresponds to the oscillating angle range of the oscillating operation of the lever L1.

Furthermore, the driven body J05 is engaged with one end R2 (the X2 side shown in Fig. 1) of the rod R2 and moves integrally with the linear operation (reciprocation) of the rod R2. Meanwhile, a device including the driven body J05, which operates using this linear operation, is connected to one end R2a of the rod R2.

Next, a thrust bearing shown in Fig. 2 is used as the support S4 of the mounting structure, and the support S4 is provided on an intermediate portion of the rod R2 between one end R2a and the other end R2z as shown in Fig. 1. As shown in Fig. 2, the thrust bearing includes a rolling element S4b that includes bearings and raceway plates (S4j and S4k) that receive the rolling element S4b, and the rod R2 is inserted into a through hole S4h that is formed at the central portion of the thrust bearing. Further, the thrust bearing (the support S4) supports the rod R2 so as to allow the rod R2 to reciprocate, and allows the slight eccentricity (inclination) of the rod R2. Accordingly, when the rod R2 moves, abnormal noises are not generated or the life of the thrust bearing is not shortened. Therefore, the driven body J05 is stably driven.

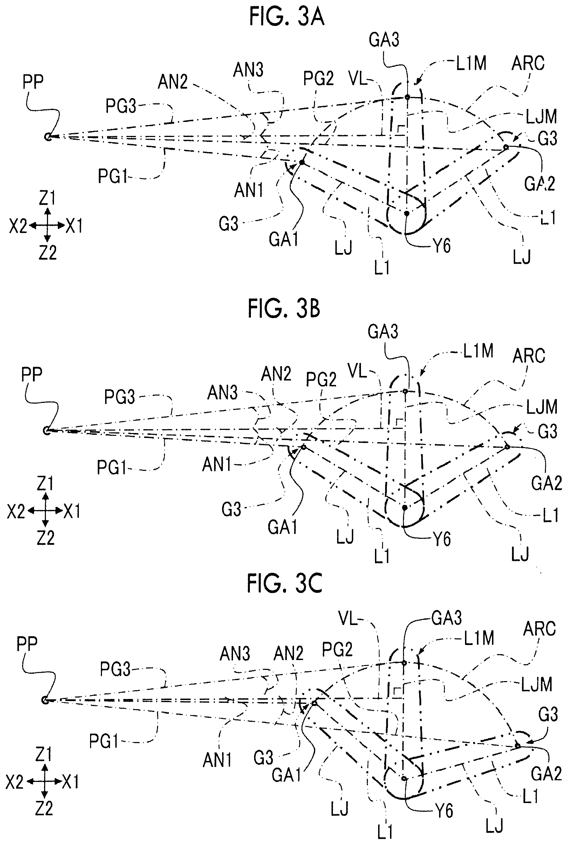

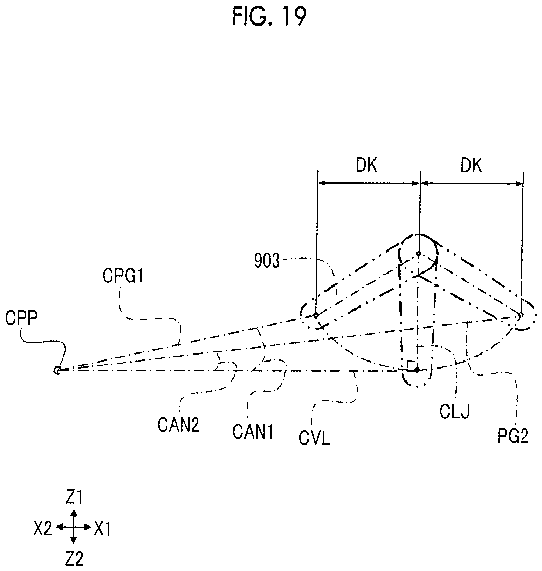

Next, the details of the mounting state of the mounting structure according to the first embodiment having the above-mentioned structure will be described with reference to Fig. 3. Fig. 3 is a view showing the mounting structure according to the first embodiment of the invention and is a side view schematically showing the motions of the lever L1 and the rod R2. Further, the mounting state of a waste gate valve control device 900 in the related art is also schematically shown in Fig. 19, and the mounting state of the mounting structure according to the first embodiment will be described in comparison with Fig. 19. Meanwhile, for the easy understanding of the description, the same names as the names used in the first embodiment and reference numerals, which have "C" at the heads of the reference numerals used in the first embodiment, are used as the names and reference numerals of the same portions as the portions of the mounting structure according to the first embodiment.

As described above, the connecting shaft G3 of the mounting structure according to the first embodiment of the invention draws an arc ARC (shown in Fig. 3) with the oscillation of the lever L1. Further, as shown in Fig. 3, an arc endpoint of the arc ARC close to the support S4 (a fulcrum PP shown in Fig. 3) is defined as a first arc endpoint GA1 and an arc endpoint of the arc ARC distant from the support S4 is defined as a second arc endpoint GA2. Meanwhile, the first arc endpoint GA1 means the position of the connecting shaft G3 when the lever L1 oscillates to the leftmost side (in an X2 direction shown in Fig. 3) in a predetermined oscillating angle range, and the second arc endpoint GA2 means the position of the connecting shaft G3 when the lever L1 oscillates to the rightmost side (in an X1 direction shown in Fig. 3) in a predetermined oscillating angle range.

Furthermore, a line segment connecting the oscillation shaft Y6 with the connecting shaft G3 is defined as a lever axis LJ. Moreover, when a line extending toward the lever axis LJ from the fulcrum PP serving as a support center of the support S4 means an oscillating angle the lever L1 corresponding to a line perpendicular to the lever axis LJ (a lever L1M shown in Fig. 3), the line perpendicular to the lever axis LJ is defined as a perpendicular line segment VL and the lever axis LJ is defined as a lever line segment LJM. In addition, a connection point between the lever line segment LJM and the arc ARC is defined as an arc intermediate point GA3.

Further, in the mounting structure, when a line connecting the fulcrum PP with the first arc endpoint GA1 is defined as a first line segment PG1, a line connecting the fulcrum PP with the second arc endpoint GA2 is defined as a second line segment PG2, and a line connecting the fulcrum PP with the arc intermediate point GA3 is defined as an intermediate line PG3 in the mounting structure as shown in Fig. 3, an angle formed between the first line segment PG1 and the perpendicular line segment VL is defined as a first angle AN1, an angle between the second line segment PG2 and the perpendicular line segment VL is defined as a second angle AN2, and an angle between the intermediate line PG3 and the perpendicular line segment VL is defined as an intermediate angle AN3.

In the mounting structure according to the first embodiment of the invention, the respective line segments, the respective angles, and the like are defined as described above; the oscillating angle range of the lever L1 is defined so that the intermediate angle AN3 is equal to the first angle AN1 (a state of Fig. 3A), the intermediate angle AN3 is equal to the second angle AN2 (a state of Fig. 3C), or the intermediate angle AN3 is larger than the first and second angles AN1 and AN2 (a state of Fig. 3B); and the lever L1 and the rod R2 are connected to each other. Meanwhile, the first angle AN1 is larger than the second angle AN2 in the state of Fig. 3A, and the second angle AN2 is larger than the first angle AN1 in the state of Fig. 3C. Further, the first angle AN1 is larger than the second angle AN2 in the state of Fig. 3B, but a state in which the second angle AN2 is larger than the first angle AN1 is also present in the above-mentioned oscillating angle range of the lever L1. Consequently, the intermediate angle AN3 becomes the maximum deflection angle at which the rod R2 is eccentric.

Meanwhile, the mounting state of the waste gate valve control device 900 in the related art is adapted so that the link lever 903 and the rod 904 are connected to each other to be orthogonal to each other and form an oscillation-neutral point of the link lever 903. That is, as shown in Fig. 19, an angle, which is formed by an lever axis CLJ and a fulcrum CPP at the oscillation-neutral point, is a right angle, and a reciprocating distance DK, which is caused by the oscillation to the right side (an X1 side shown in Fig. 19) from the oscillation-neutral point, is equal to a reciprocating distance DK, which is caused by the oscillation to the left side (an X2 side shown in Fig. 19) from the oscillation-neutral point. According to this structure, a line (the perpendicular line segment VL), which extends from the fulcrum CPP and is perpendicular to the lever axis CLJ, and a line (the intermediate line PG3 in the first embodiment), which connects the fulcrum CPP with an arc drawn during the oscillation of an end of the lever axis CLJ, corresponds to each other; and becomes a perpendicular line segment CVL. Accordingly, an angle (the intermediate angle AN3 in the first embodiment) between the line, which extends from the fulcrum CPP and is perpendicular to the lever axis CLJ, and the line, which connects the fulcrum CPP with an arc drawn during the oscillation of an end of the lever axis CLJ, becomes 0°. As a result, only a first angle CAN1, which is an angle between a first line segment CPG1 and the perpendicular line segment CVL, and a second angle CAN2, which is an angle between a second line segment CPG2 and the perpendicular line segment CVL, are formed.

In the mounting structure in the related art having the above-mentioned structure, the maximum deflection angle at which the rod 904 is eccentric is obtained at the time of the first angle CAN1 that is obtained when the link lever 903 is closest to the fulcrum CPP in the oscillating angle range of the link lever 903. For this reason, when the range of the linear operation of the rod 904 is the same as the range of the linear operation of the rod R2 of the embodiment of the invention, the deflection angle of the rod 904 of the mounting structure in the related art is necessarily larger than that of the mounting structure of the embodiment of the invention. That is, since the first or second angle AN1 or AN2 and the intermediate angle AN3 are formed on both sides of the perpendicular line segment VL in the mounting structure according to the embodiment of the invention but the first and second angles CAN1 and CAN2 are formed only on one side of the perpendicular line segment CVL in the mounting structure in the related art, the first angle CAN1 necessarily becomes larger than the intermediate angle AN3. Accordingly, the deflection angle of the rod 904 is necessarily large.

Effects of the mounting structure according to the first embodiment of the invention having the above-mentioned structure will be summarized and described below.

The mounting structure according to the first embodiment of the invention has been adapted so that the intermediate angle AN3 between the perpendicular line segment VL and the intermediate line PG3 is equal to or greater than a larger one of the first angle AN1 between the perpendicular line segment VL and the first line segment PG1 and the second angle AN2 between the perpendicular line segment VL and the second line segment PG2. Accordingly, the deflection angle of the rod R2 about the fulcrum PP of the rod R2, which is supported by the support S4, can be reduced in the oscillating angle range of the lever L1. For this reason, it is possible to suppress the oscillation of the driven body J05 that is engaged with one end R2a of the rod R2. Therefore, it is possible to reduce the trouble of the driven body J05 that is caused by the excessive oscillation of the driven body J05.

Further, since the support S4 is a thrust bearing, the rod R2 can obliquely move and reciprocate without the generation of abnormal noises or the shortening of the life of the thrust bearing when the rod R2 moves. Therefore, the driven body J05 is stably driven.

### Second embodiment

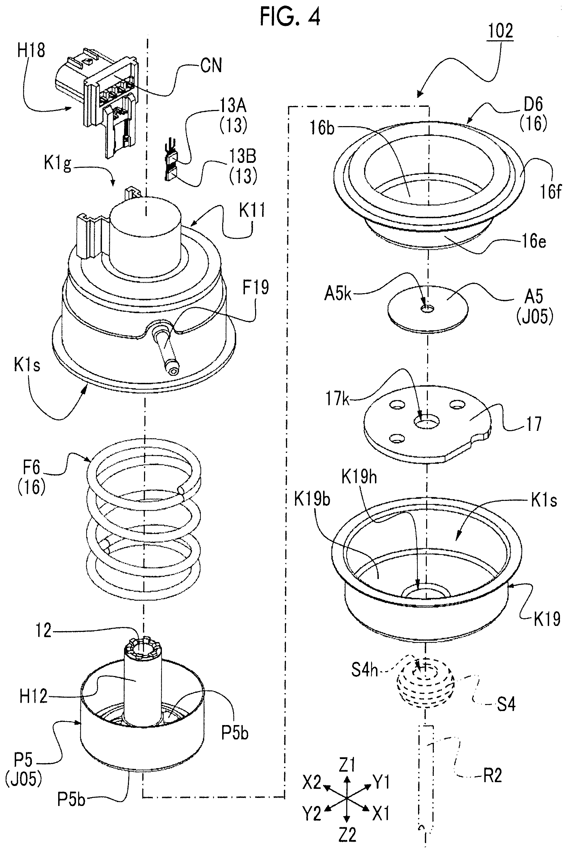

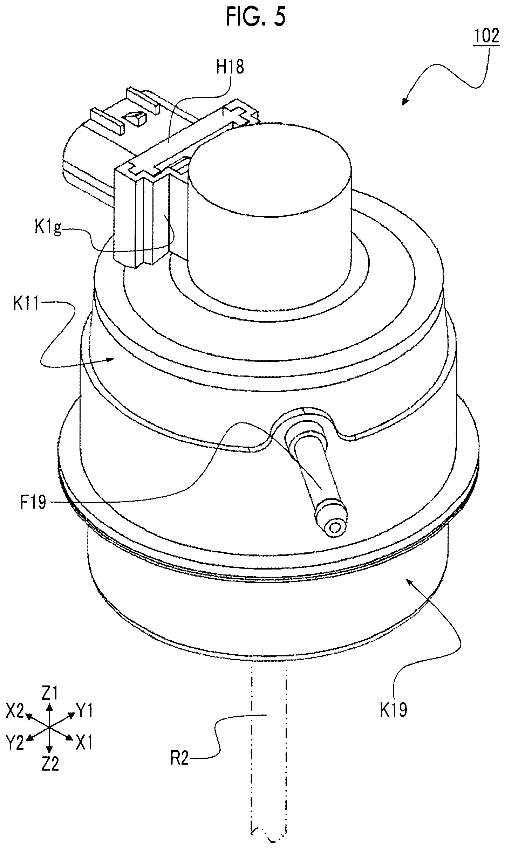

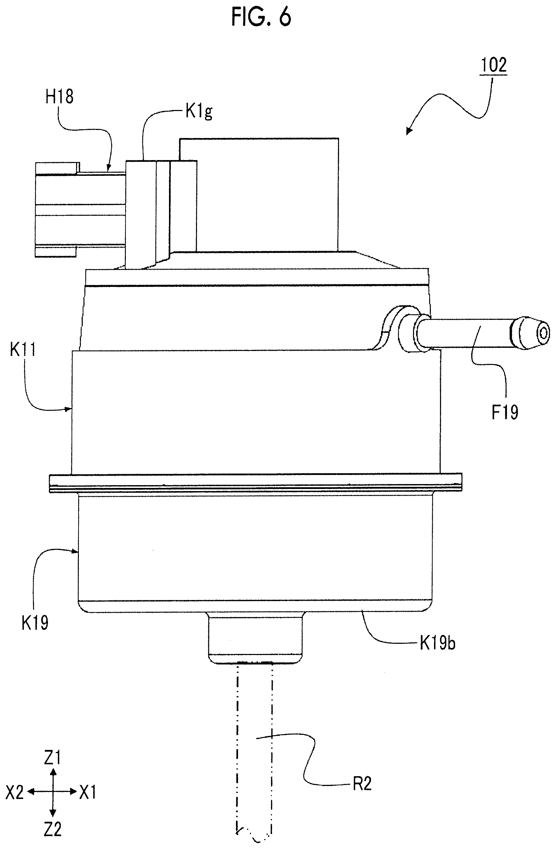

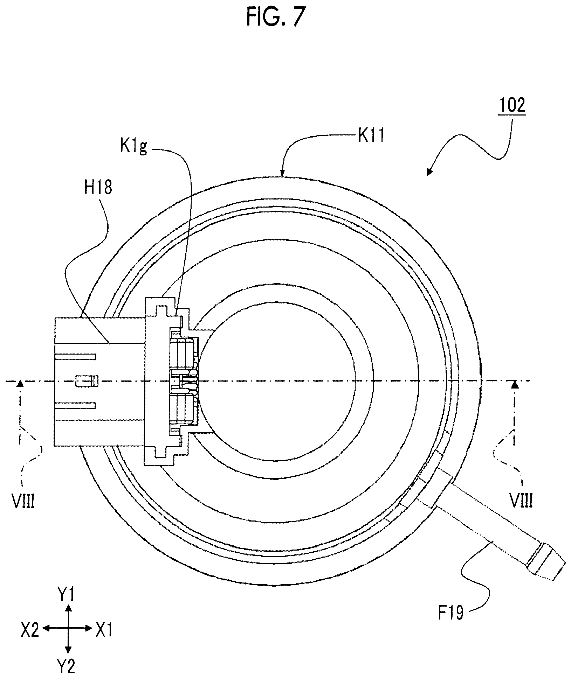

Fig. 4 is an exploded perspective view of a position detecting device 102 according to a second embodiment of the invention. Fig. 5 is a perspective view of the position detecting device 102 according to the second embodiment of the invention. Fig. 6 is a side view of the position detecting device 102 according to the second embodiment of the invention. Fig. 7 is a top view of the position detecting device 102 according to the second embodiment of the invention. Further, the link mechanism including the mounting structure according to the first embodiment is connected to the position detecting device 102 according to the second embodiment. Meanwhile, the same components as the components of the first embodiment will be denoted by the same reference numerals and the detailed description thereof will be omitted.

The position detecting device 102 according to the second embodiment of the invention has an appearance shown in Figs. 5 to 7, and is formed by the combination of an upper case K11 and a lower case K19. As shown in Fig. 4, the position detecting device 102 includes a movable magnet 12 that moves in a space formed in the upper and lower cases K11 and K19, detecting means 13 for detecting the operation of the movable magnet 12, and a driven body J05 that can be driven integrally with the movable magnet 12. In addition, the position detecting device 102 according to the second embodiment includes a drive unit 16 that moves the movable magnet 12, a fixing plate 17 that is provided on a bottom K19b of the lower case K19, a connector case H18 in which a connector CN to be electrically connected to an external device is built, and a fitting F19 that is connected to a pneumatic control device such as a decompression source (not shown) by a tube or the like.

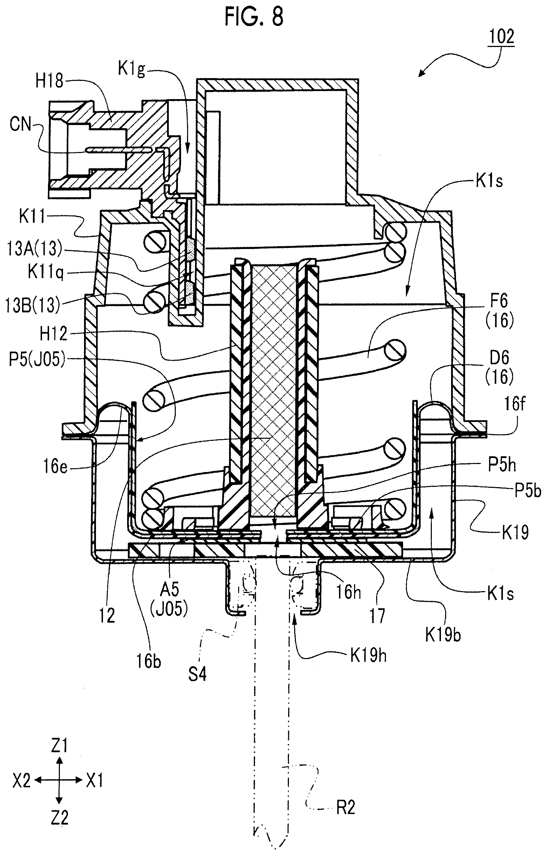

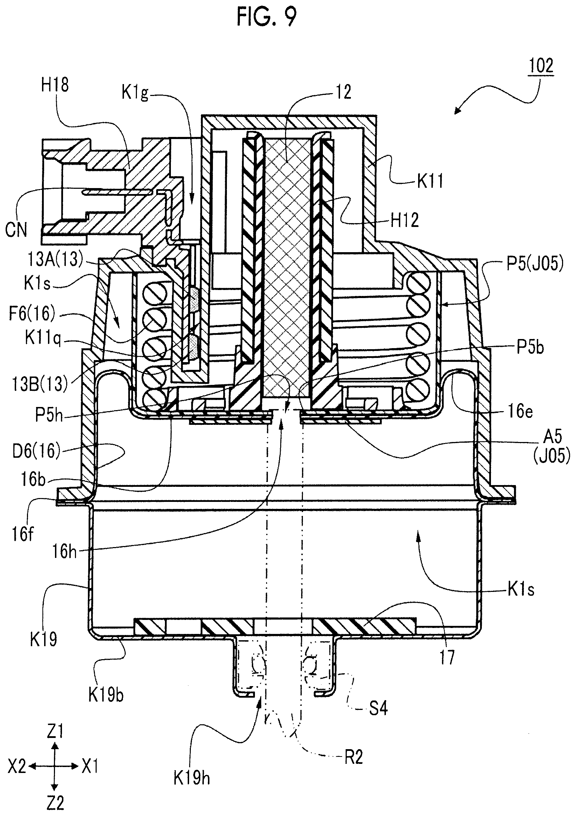

Fig. 8 is a view showing the position detecting device 102 according to the second embodiment of the invention and is a cross-sectional view taken along line VIII-VIII shown in Fig. 7. Fig. 9 is a view showing the operation of the position detecting device 102 according to the second embodiment of the invention, and is a cross-sectional view of the position detecting device 102 when the movable magnet 12 is moved up from a lower limit state of Fig. 8 and is positioned at an upper limit state.

First, the upper and lower cases K11 and K19 of the position detecting device 102 are manufactured by the working of a metal material. Further, when combined with each other, the upper and lower cases K11 and K19 form a receiving portion K1s in which the movable magnet 12, the driven body J05, and the drive unit 16 are received and the movable magnet 12 can move as shown in Figs. 8 and 9.

Furthermore, as shown in Figs. 5 to 7, the upper case K11 is provided with the fitting F19 that extends in a direction perpendicular to a side wall of an intermediate portion thereof. The fitting F19 is formed so as to have a hollow portion, and the receiving portion K1s is connected to the outside through the hollow portion. Moreover, since an engagement receiving portion K1g where one side of the connector case H18 is inserted and engaged is provided at an upper portion of the upper case K11, the connector case H18 is provided at the upper portion of the upper case K11.

Further, the lower case K19 includes an opening K19h that is opened at the central portion of the bottom K19b as shown in Fig. 4, and the rod R2 of the mounting structure is inserted into the opening K19h as shown in Figs. 8 and 9. Furthermore, the support S4 of the mounting structure is received in the opening K19h, and the support S4 supports the rod R2 so as to allow the rod R2 to reciprocate. Meanwhile, the inside of the receiving portion K1s of the lower case K19 is maintained at atmospheric pressure due to the opening K19h.

Next, a columnar permanent magnet is used as the movable magnet 12 of the position detecting device 102, and the movable magnet 12 is held by a movable magnet holder H12 made of a synthetic resin as shown in Figs. 4, 8, and 9. The movable magnet holder H12 is formed so as to cover the columnar outer portion of the movable magnet 12, and a pedestal portion of the movable magnet holder H12 is fixed to the driven body J05 so that the movable magnet holder H12 operates together with the driven body J05.

Next, the detecting means 13 of the position detecting device 102 is formed by packaging a Hall element and a semiconductor element with a synthetic thermosetting resin, and two detecting means 13 are provided on an outer wall surface K11q that faces the movable magnet 12 with a side wall of the upper case K11 interposed therebetween as shown in Figs. 8 and 9. That is, a partition wall is provided between the two detecting means 13 (13A and 13B) and the movable magnet 12. Accordingly, a space in which the detecting means 13 are disposed and a space in which the movable magnet 12 is disposed are isolated from each other. As a result, even though an environmental change occurs in the space in which the rod R2 is disposed, it is possible to reduce an influence on the detecting means 13. Further, the two detecting means 13 (13A and 13B) are mounted on a circuit substrate and are mounted on one side of the connector case H18 together with the circuit substrate. Accordingly, when the connector case H18 only has to be engaged with and inserted into the engagement receiving portion K1g of the upper case K11, the two detecting means 13 (13A and 13B) are disposed at a position facing the outer wall surface K11q.

Furthermore, the detecting means 13 detect the change of a magnetic field that is caused by the operation (reciprocation) of the movable magnet 12 in a vertical direction; and the detecting means 13A detects the reciprocation direction of the movable magnet 12 (a Z direction shown in Fig. 8) and the detecting means 13B detects an interval direction between the detecting means 13B and the movable magnet 12 (an X direction shown in Fig. 8), so that the detecting means 13 detect the degree of the operation of the movable magnet 12. Accordingly, since the operation of the movable magnet 12 is detected in two directions, that is, the reciprocation direction and the interval direction, it is possible to more accurately detect the operation of the movable magnet 12. Therefore, it is possible to improve the position-detection accuracy of the position detecting device 102.

Next, the driven body J05 of the position detecting device 102 is engaged with the rod R2 of the link mechanism and is adapted to reciprocate together with the rod R2. As shown in Figs. 8 and 9, the driven body J05 includes a piston part P5 to which the movable magnet holder H12 for the movable magnet 12 is fixed and a reinforcing plate A5 that is disposed under the piston part P5 (a Z2 direction shown in Fig. 8).

A metal material is used for the piston part P5 of the driven body J05. The piston part P5 is formed in a cylindrical shape as shown in Fig. 4, and includes a bottom P5b that is formed on one side thereof and a hole portion P5h which is formed at the center of the bottom P5b and into which the rod R2 is inserted as shown in Figs. 8 and 9.

A metal material is used for the reinforcing plate A5 of the driven body J05, and the reinforcing plate A5 is formed in the shape of a disc as shown in Fig. 4 and includes a through hole A5k which is formed at the center thereof and into which the rod R2 is inserted. Further, as shown in Figs. 8 and 9, the reinforcing plate A5 is provided on the bottom P5b of the piston part P5 with the drive unit 16 (a bottom portion 16b of a diaphragm D6 to be described below) interposed therebetween.

Next, as shown in Figs. 8 and 9, the drive unit 16 of the position detecting device 102 includes a diaphragm D6 that divides the receiving portion K1s into two spaces and a biasing member F6 that biases a bottom portion 16b of the diaphragm D6. Meanwhile, the two spaces mean a decompression chamber that is formed on one side of the diaphragm D6 facing the upper case K11 and an atmospheric chamber that is formed on the other side of the diaphragm D6 facing the lower case K19.

A rubber material having elasticity is used for the diaphragm D6 of the drive unit 16. The diaphragm D6 is formed in a cylindrical shape as shown in Fig. 4; and includes a flange portion 16f that is to be interposed between the upper and lower cases K11 and K19, a deformation portion 16e that is deformable, and the bottom portion 16b that includes a through hole 16h (see Fig. 8) which is formed at the center thereof and into which the rod R2 is inserted. Further, as shown in Figs. 8 and 9, the diaphragm D6 is disposed so that the bottom portion 16b of the diaphragm D6 is interposed between the bottom P5b of the piston part P5 and the reinforcing plate A5, and the rod R2 is inserted into the through hole 16h and is fixed to the driven body J05. Accordingly, even though the diaphragm D6 is deformed, the bottom portion 16b of the diaphragm D6 can be kept flat.

The biasing member F6 of the drive unit 16 is a coil spring of which both ends are polished in the form of a flat surface. As shown in Figs. 8 and 9, one end of the biasing member F6 comes into contact with the ceiling of the upper case K11 and the other end comes into contact with the bottom P5b of the piston part P5. Further, the biasing member F6 biases the piston part P5 downward.

The drive unit 16 having the above-mentioned structure moves the movable magnet 12 in the vertical direction by the deformation of the diaphragm D6. That is, when the decompression chamber is decompressed through the fitting F19, which is connected to the pneumatic control device by a tube or the like, from the lower limit state of Fig. 8, the diaphragm D6 is deformed and the bottom portion 16b of the diaphragm D6 is moved up (the Z1 direction shown in Fig. 8) against a biasing force of the biasing member F6. Further, when a force, which is generated by the decompression of the decompression chamber, is much larger than the biasing force of the biasing member F6, the movement of the bottom portion 16b of the diaphragm D6 is performed to the upper limit state of Fig. 9. Meanwhile, when the decompression of the decompression chamber is released, the movement of the bottom portion 16b of the diaphragm D6 is performed to the lower limit state of Fig. 8 by the biasing force of the biasing member F6. Since the drive unit 16 moves in the vertical direction as described above, the movable magnet 12 and the driven body J05 are moved in the vertical direction.

Furthermore, since the link mechanism including the mounting structure according to the first embodiment is connected to the position detecting device 102 according to the second embodiment of the invention, the reciprocation of the movable magnet 12 and the driven body J05 in the vertical direction, which is caused by the above-mentioned drive unit 16, is performed with small deflection. Accordingly, since it is possible to reduce the variation of an interval between the movable magnet 12 and the detecting means 13 when the rod R2 reciprocates, it is possible to suppress the deterioration of the detection accuracy of the detecting means 13 that is caused by an influence of the deflection of reciprocation. Therefore, it is possible to provide the position detecting device 102 of which the deterioration of the detection accuracy has been suppressed.

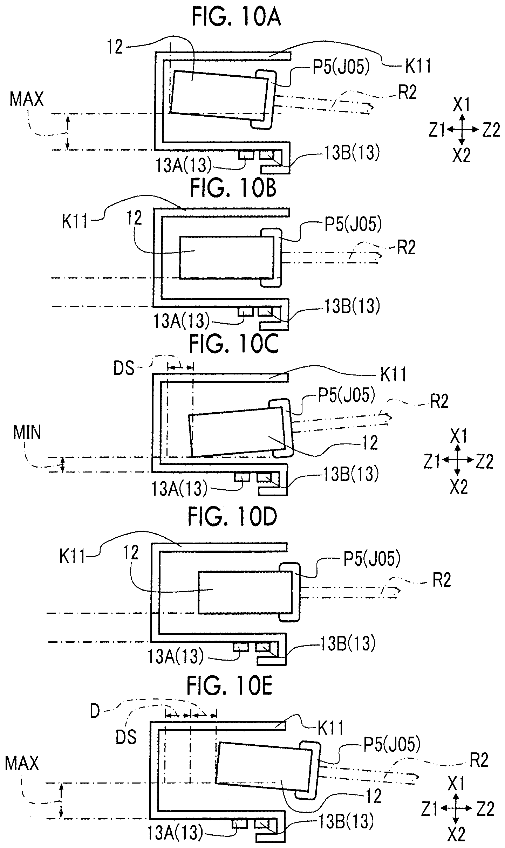

Next, the reciprocation in the vertical direction will be described in detail with reference to Fig. 10. Fig. 10 is a view showing the operations of the movable magnet 12 and the driven body J05, in which Fig. 10A shows a state in which the lever L1 of the mounting structure is positioned at the first arc endpoint GA1, Fig. 10B shows a state in which the connecting shaft G3 of the lever L1 is positioned on the perpendicular line segment VL from the state of Fig. 10A, Fig. 10C shows a state in which the lever L1 is positioned at the arc intermediate point GA3 from the state of Fig. 10B, Fig. 10D shows a state in which the connecting shaft G3 of the lever L1 is positioned on the perpendicular line segment VL from the state of Fig. 10C, and Fig. 10E shows a state in which the lever L1 is positioned at the second arc endpoint GA2 from the state of Fig. 10D. Meanwhile, Fig. 10 schematically shows only the upper case K11, the movable magnet 12, the detecting means 13, and the driven body J05 for the easy understanding of description; and the vertical direction (Z direction) in Figs. 8 and 9 is rotated in Fig. 10 by an angle of 90°.

First, in the position detecting device 102 according to the second embodiment of the invention, the deflection angle of the rod R2 becomes maximum on the X1 side and the inclination of the movable magnet 12 becomes maximum on the X1 side at the starting point (the state of Fig. 10A) of the entire moving distance of the reciprocation of the movable magnet 12. At that time, the maximum interval among the intervals between the movable magnet 12 and the detecting means 13 has the maximum value. Since the movable magnet 12 is inclined as shown in Fig. 10A, it is difficult to make an interval of every portion between the detecting means 13 and the movable magnet 12 have the maximum value. However, for example, an interval between an end portion (the Z1 side shown in Fig. 10) of the movable magnet 12 and the detecting means 13 is made to have the maximum value (MAX shown in Fig. 10A).

Next, when the lever L1 is rotated, the movable magnet 12 moves down (in the Z2 direction shown in Fig. 10) and the movable magnet 12 is in a state of Fig. 10C via a state of Fig. 10B in which the movable magnet 12 is parallel to the detecting means 13, that is, a state in which the deflection angle of the rod R2 is 0°. Since the deflection angle of the rod R2 becomes the maximum on the X2 side at this time, the inclination of the movable magnet 12 becomes the maximum on the X2 side. Accordingly, the minimum interval among the intervals between the movable magnet 12 and the detecting means 13 has the minimum value (MIN shown in Fig. 10C).

Finally, when the lever L1 is further rotated, the movable magnet 12 moves down (in the Z2 direction show in Fig. 10) and the movable magnet 12 moves to the end point (a state of Fig. 10E) of the entire moving distance via a state of Fig. 10D in which the movable magnet 12 is parallel to the detecting means 13, that is, a state in which the deflection angle of the rod R2 is 0°. Then, the rotation of the lever L1 ends. In the second embodiment of the invention, the end point of the entire moving distance is determined so that the deflection angle of the rod R2 becomes maximum on the X1 side and the inclination of the movable magnet 12 becomes maximum on the X1 side as at the starting point of Fig. 10A. Meanwhile, needless to say, the starting point and the end point are reversed when the movable magnet 12 moves in the Z1 direction shown in Fig. 10 since the movable magnet 12 reciprocates.

A relationship between the reciprocation of the movable magnet 12 in the vertical direction and the position of the movable magnet 12 will be summarized. The movable magnet 12, which corresponds to the starting point and the end point of the entire moving distance in the entire moving distance of the reciprocation of the movable magnet 12, is disposed at a position where the interval between the movable magnet 12 and the detecting means 13 is maximum (see Figs. 10A and 10E). Further, the movable magnet 12, which corresponds to the middle point of the entire moving distance, is disposed at a position (see Fig. 10C) where the interval between the movable magnet 12 and the detecting means 13 has the minimum value (see a moving distance DS shown in Fig. 10E). The driven body J05 and the rod R2 of the mounting structure of the position detecting device 102 according to the second embodiment of the invention are engaged with each other so that the movable magnet 12 is disposed as described above.

Furthermore, the deflection angle of the rod R2 of the link mechanism of the mounting structure described in the first embodiment of the invention will be described. The detecting means 13 may be disposed at a position where an interval between the position of the movable magnet 12 corresponding to a larger one of the first and second angles AN1 and AN2 of the link mechanism and the detecting means 13 is the same as the interval between the position of the movable magnet 12 corresponding to the intermediate angle AN3 and the detecting means 13. Accordingly, it is possible to reduce the variation of the interval between the movable magnet 12 and the detecting means 13 when the movable magnet 12 reciprocates. Therefore, it is possible to further suppress the deterioration of the detection accuracy of the detecting means 13 that is caused by an influence of the deflection of the movable magnet 12.

Finally, a metal material is used for the fixing plate 17 of the position detecting device 102. The fixing plate 17 is formed in the shape of a disc as shown in Fig. 4, and includes a through hole 17k which is formed at the center thereof and into which the rod R2 is inserted. Further, as shown in Figs. 8 and 9, the fixing plate 17 is provided on the bottom K19b of the lower case K19 and fixes the support S4 of the mounting structure that is received in the opening K19h of the lower case K19.

Effects of the position detecting device 102 according to the second embodiment of the invention having the above-mentioned structure will be summarized and described below.

Since the driven body J05, which operates the movable magnet 12, of the position detecting device 102 according to the second embodiment of the invention is engaged with the link mechanism that can reduce the deflection angle of the rod R2 about the fulcrum PP, the deflection of the reciprocation of the driven body J05 of the position detecting device 102 is small when the rod R2 reciprocates. For this reason, since it is possible to reduce the variation of the interval between the movable magnet 12 and the detecting means 13 when the rod R2 reciprocates, it is possible to suppress the deterioration of the detection accuracy of the detecting means 13 that is caused by an influence of the deflection of reciprocation. Therefore, it is possible to provide the position detecting device 102 of which the deterioration of the detection accuracy has been suppressed.

Further, the detecting means 13 has been disposed at the position where an interval between the position of the movable magnet 12 corresponding to a larger one of the first and second angles AN1 and AN2 of the link mechanism and the detecting means 13 is the same as the interval between the position of the movable magnet 12 corresponding to the intermediate angle AN3 and the detecting means 13. Accordingly, it is possible to reduce the variation of the interval between the movable magnet 12 and the detecting means 13 when the movable magnet 12 reciprocates. Therefore, it is possible to further suppress the deterioration of the detection accuracy of the detecting means 13 that is caused by an influence of the deflection of the movable magnet 12.

Furthermore, since the detecting means 13 detects the degree of the operation of the movable magnet 12 in two directions, that is, the reciprocation direction and the interval direction, it is possible to more accurately detect the operation of the movable magnet 12. Therefore, it is possible to improve the position-detection accuracy of the position detecting device 102.

Moreover, since the partition wall is provided between the movable magnet 12 and the detecting means 13, the space in which the movable magnet 12 is disposed and the space in which the detecting means 13 is disposed are isolated from each other. Accordingly, even though an environmental change occurs in the space in which the rod R2 is disposed, it is possible to reduce an influence on the detecting means 13.

### Third embodiment

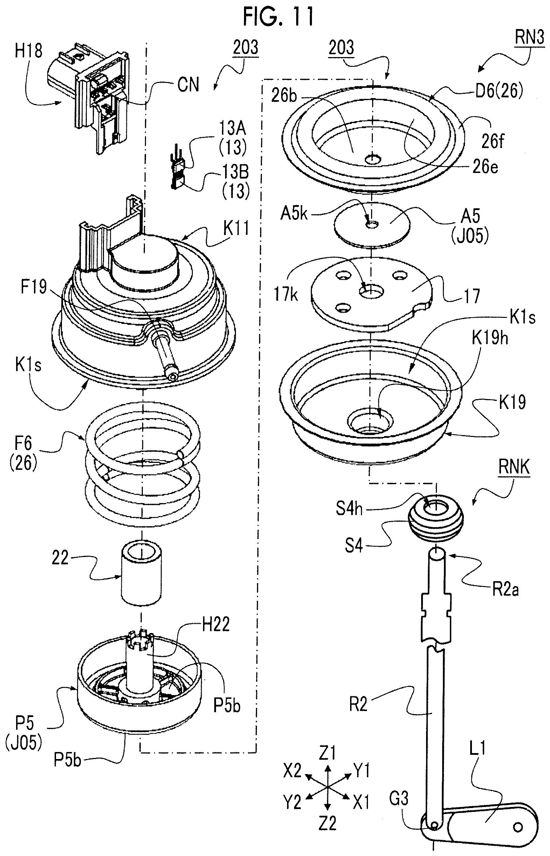

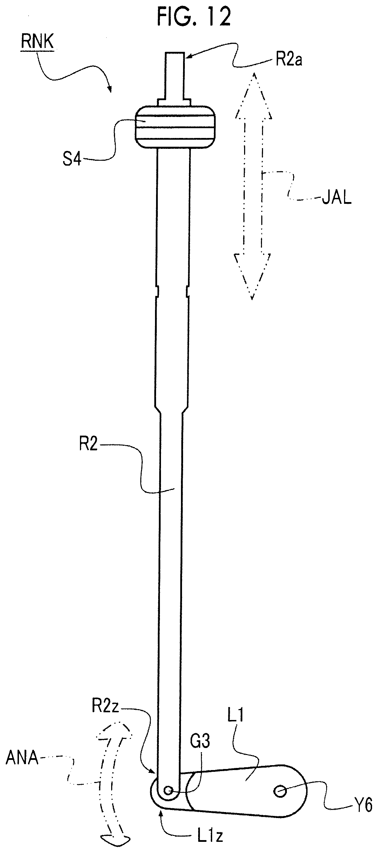

Fig. 11 is an exploded perspective view of a detecting device RN3 with a link mechanism according to a third embodiment of the invention. Fig. 12 is a side view of the link mechanism RNK according to the third embodiment of the invention. Meanwhile, the same components as the components of the first and second embodiments will be denoted by the same reference numerals and the detailed description thereof will be omitted.

As shown in Fig. 11, the detecting device RN3 with the link mechanism according to the third embodiment of the invention includes the link mechanism RNK that includes the mounting structure according to the first embodiment and a detecting device 203 that is connected to the link mechanism RNK.

First, as shown in Fig. 12, the link mechanism RNK of the detecting device RN3 with the link mechanism includes a lever L1 that oscillates (ANA shown in Fig. 12) in a predetermined oscillating angle range, a rod R2 of which one end R2a is engaged with a driven body J05 (see Fig. 11), and a support S4 that supports the rod R2 so as to allow the rod R2 to reciprocate (JAL shown in Fig. 12) in a predetermined reciprocating range. Further, in the link mechanism RNK, the other end L1z of the lever L1 and the other end R2z of the rod R2 are connected to each other by a connecting shaft G3 and an oscillating operation of the lever L1 in a predetermined oscillating angle range and a linear operation (reciprocation) of the rod R2 in the reciprocating range can be performed. Meanwhile, since the link mechanism RNK has been described in detailed in the mounting structure according to the first embodiment, the detailed description of the link mechanism RNK will be omitted.

Further, since the link mechanism RNK includes the mounting structure according to the first embodiment, as described in the first embodiment, the lever L1 and the rod R2 are connected to each other so that an intermediate angle AN3 between a perpendicular line segment VL and an intermediate line PG3 is equal to or greater than a larger one of a first angle AN1 between the perpendicular line segment VL and a first line segment PG1 and a second angle AN2 between the perpendicular line segment VL and a second line segment PG2. Accordingly, it is possible to reduce the deflection angle of the rod R2 about a fulcrum PP of the rod R2, which is supported by the support S4, in the oscillating angle range of the lever L1. For this reason, it is possible to suppress the oscillation of the driven body J05 that is engaged with one end R2a of the rod R2. Accordingly, it is possible to reduce the trouble of the driven body J05 that is caused by the excessive oscillation of the driven body J05.

Further, since the link mechanism RNK includes the mounting structure according to the first embodiment, the support S4 is a thrust bearing as described in the first embodiment. For this reason, when the rod R2 is moved, the rod R2 can obliquely move and reciprocate without the generation of abnormal noises or the shortening of the life of the thrust bearing. Therefore, the driven body J05 is stably driven.

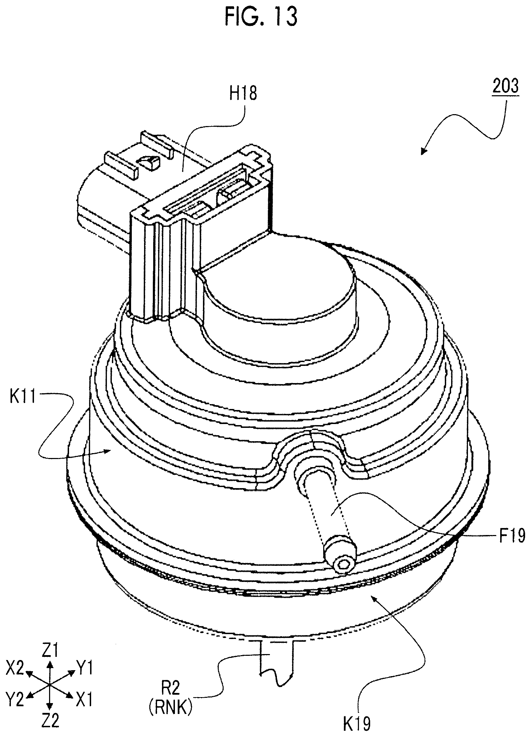

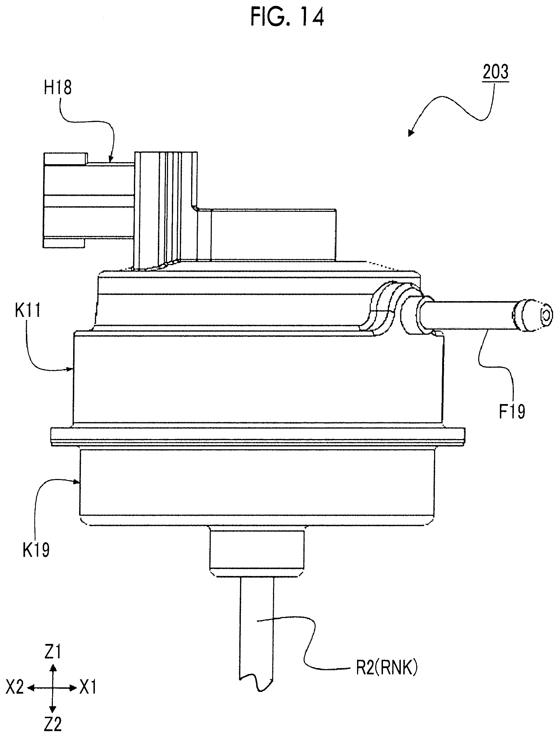

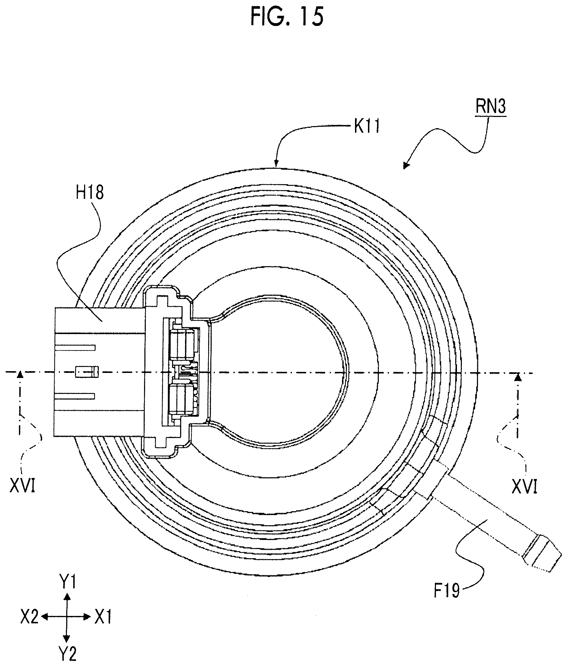

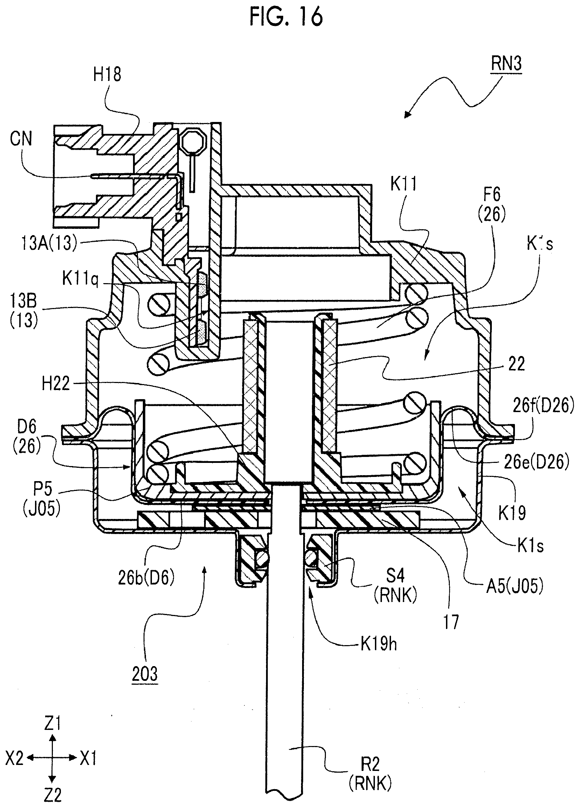

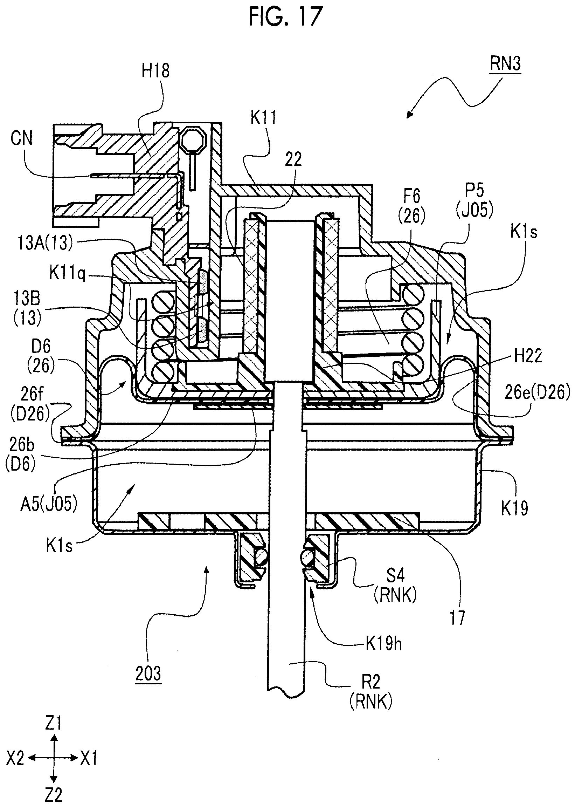

Next, the detecting device 203 of the detecting device RN3 with the link mechanism will be described. Fig. 13 is a perspective view of the detecting device 203. Fig. 14 is a side view of the detecting device 203. Fig. 15 is a top view of the detecting device 203. Figs. 13 and 14 show the link mechanism RNK of which a part has been omitted, for the easy understanding of description. Fig. 16 is a view showing the detecting device 203 according to the third embodiment of the invention and is a cross-sectional view taken along line XVI-XVI shown in Fig. 15. Fig. 17 is a view showing the operation of the detecting device 203 according to the third embodiment of the invention and is a cross-sectional view showing a state in which a movable magnet 22 is moved up from a lower limit state of Fig. 16 and is positioned in an upper limit state.

The detecting device 203 has an appearance shown in Figs. 13 to 15, and is formed by the combination of an upper case K11 and a lower case K19. The detecting device 203 includes a movable magnet 22 that moves in a space formed in the upper and lower cases K11 and K19, detecting means 13 for detecting the operation of the movable magnet 22, and a driven body J05 that can be driven integrally with the movable magnet 22. In addition, the detecting device RN3 with the link mechanism according to the third embodiment includes a drive unit 26 that moves the movable magnet 22, a fixing plate 17 that is provided on a bottom K19b of the lower case K19, a connector case H18 in which a connector CN to be electrically connected to an external device is built, and a fitting F19 that is connected to a pneumatic control device such as a decompression source by a tube or the like.

First, the upper and lower cases K11 and K19 of the detecting device 203 are manufactured by the working of a metal material as in the second embodiment of the invention. Further, when combined with each other, the upper and lower cases K11 and K19 form a receiving portion K1s in which the movable magnet 22 and the drive unit 26 are received and the movable magnet 22 can move as shown in Figs. 16 and 17. Meanwhile, since the upper and lower cases K11 and K19 are the same as those of the second embodiment of the invention, the detailed description thereof will be omitted.

Next, a cylindrical permanent magnet is used as the movable magnet 22 of the detecting device 203, and the movable magnet 22 is held by a cylindrical movable magnet holder H22 made of a synthetic resin as shown in Figs. 11, 16, and 17. The movable magnet holder H22 is inserted into the cylindrical movable magnet 22, so that the movable magnet 22 is held. Meanwhile, a polybutyleneterephtalate (PBT) resin, a polyamide resin, or the like is suitably used as the synthetic resin material of the movable magnet holder H22.

Next, the detecting means 13 of the detecting device 203 is formed by packaging a Hall element and a semiconductor element with a synthetic thermosetting resin as in the second embodiment of the invention, and two detecting means 13 are provided on an outer wall surface K11q that faces the movable magnet 22 with a side wall of the upper case K11 interposed therebetween as shown in Figs. 16 and 17. That is, a partition wall is provided between the two detecting means 13 (13A and 13B) and the movable magnet 22. Accordingly, a space in which the detecting means 13 is disposed and a space in which the movable magnet 22 is disposed are isolated from each other. As a result, even though an environmental change occurs in the space in which the rod R2 is disposed, it is possible to reduce an influence on the detecting means 13. Further, the two detecting means 13 (13A and 13B) are mounted on a circuit substrate and are mounted on one side of the connector case H18 together with the circuit substrate. Accordingly, when the connector case H18 only has to be engaged with and inserted into an engagement receiving portion K1g of the upper case K11, the two detecting means 13 (13A and 13B) are disposed at a position facing the outer wall surface K11q.

Furthermore, the detecting means 13 detect the change of a magnetic field that is caused by the operation (reciprocation) of the movable magnet 22 in a vertical direction; and the detecting means 13A detects the reciprocation direction of the movable magnet 22 (a Z direction shown in Fig. 16) and the detecting means 13B detects an interval direction between the detecting means 13B and the movable magnet 22 (an X direction shown in Fig. 16), so that the detecting means 13 detect the degree of the operation of the movable magnet 22. Accordingly, since the operation of the movable magnet 22 is detected in two directions, that is, the reciprocation direction and the interval direction, it is possible to more accurately detect the operation of the movable magnet 22. Therefore, it is possible to improve the position-detection accuracy of the detecting device 203.

Next, the driven body J05 of the detecting device 203 is engaged with the rod R2 of the link mechanism RNK and is adapted to reciprocate together with the rod R2. As shown in Figs. 16 and 17, the driven body J05 includes a piston part P5 to which the movable magnet holder H22 for the movable magnet 22 is fixed and a reinforcing plate A5 that is disposed under the piston part P5 (a Z2 direction shown in Fig. 16).

The piston part P5 and the reinforcing plate A5 of the driven body J05 are made of a metal material as in the second embodiment. Meanwhile, since the piston part P5 and the reinforcing plate A5 are the same as those of the second embodiment of the invention, the detailed description thereof will be omitted.

Next, as shown in Figs. 16 and 17, the drive unit 26 of the detecting device 203 includes a diaphragm D6 that divides the receiving portion K1s into two spaces and a biasing member F6 that biases a bottom portion 26b of the diaphragm D6. Further, a flange portion 26f of the diaphragm D6 is disposed so as to be interposed between the upper and lower cases K11 and K19. Meanwhile, the two spaces mean a decompression chamber that is formed on one side of the diaphragm D6 facing the upper case K11 and an atmospheric chamber that is formed on the other side of the diaphragm D6 facing the lower case K19.

A rubber material having elasticity is used for the diaphragm D6 of the drive unit 26, and a coil spring of which both ends are polished in the form of a flat surface is used as the biasing member F6 of the drive unit 26. Meanwhile, since the diaphragm D6 and the biasing member F6 of the drive unit 26 are the same as those of the second embodiment of the invention, the detailed description thereof will be omitted.

Further, the drive unit 26 moves the movable magnet 22 in the vertical direction by the deformation of a deformation portion 26b of the diaphragm D6. That is, when the decompression chamber is decompressed through a fitting F19, which is connected to a pneumatic control device by a tube or the like, from the lower limit state of Fig. 16, the diaphragm D6 is deformed and the bottom portion 26b of the diaphragm D6 is moved up (the Z1 direction shown in Fig. 16) against a biasing force of the biasing member F6. Furthermore, when a force, which is generated by the decompression of the decompression chamber, is much larger than the biasing force of the biasing member F6, the movement of the bottom portion 26b of the diaphragm D6 is performed to the upper limit state of Fig. 17. Meanwhile, when the decompression of the decompression chamber is released, the movement of the bottom portion 26b of the diaphragm D6 is performed to the lower limit state of Fig. 16 by the biasing force of the biasing member F6. Since the drive unit 26 moves in the vertical direction as described above, the movable magnet 22 and the driven body J05 are moved in the vertical direction.

Moreover, since the detecting device RN3 with the link mechanism according to the third embodiment of the invention includes the link mechanism RNK including the mounting structure according to the first embodiment, the reciprocation of the movable magnet 22 and the driven body J05 in the vertical direction, which is caused by the above-mentioned drive unit 26, is performed with small deflection. Accordingly, when the rod R2 reciprocates, the deflection of the reciprocation of the driven body J05 of the detecting device 203 is small. For this reason, since it is possible to reduce the variation of the interval between the movable magnet 22 and the detecting means 13 when the rod R2 reciprocates, it is possible to suppress the deterioration of the detection accuracy of the detecting means 13 that is caused by an influence of the deflection of reciprocation. Therefore, it is possible to provide the detecting device RN3 with the link mechanism of which the deterioration of the detection accuracy has been suppressed.

Finally, a metal material is used for the fixing plate 17 of the detecting device 203. The fixing plate 17 is formed in the shape of a disc as shown in Fig. 11, and includes a through hole 17k which is formed at the center thereof and into which the rod R2 is inserted. Further, as shown in Figs. 16 and 17, the fixing plate 17 is provided on a bottom K19b of the lower case K19 and fixes the support S4 of the mounting structure that is received in an opening K19h of the lower case K19.

Effects of the detecting device RN3 with the link mechanism according to the third embodiment of the invention having the above-mentioned structure will be summarized and described below.

The link mechanism RNK of the detecting device RN3 with the link mechanism according to the third embodiment of the invention has been adapted so that the intermediate angle AN3 between the perpendicular line segment VL and the intermediate line PG3 is equal to or greater than a larger one of the first angle AN1 between the perpendicular line segment VL and the first line segment PG1 and the second angle AN2 between the perpendicular line segment VL and the second line segment PG2. Accordingly, it is possible to reduce the deflection angle of the rod R2 about the fulcrum PP of the rod R2, which is supported by the support S4, in the oscillating angle range of the lever L1. For this reason, it is possible to suppress the oscillation of the driven body J05 that is engaged with one end R2a of the rod R2. Therefore, it is possible to reduce the trouble of the driven body J05 that is caused by the excessive oscillation of the driven body J05.

Further, since the support S4 of the link mechanism RNK is a thrust bearing, the rod R2 can obliquely move and reciprocate without the generation of abnormal noises or the shortening of the life of the thrust bearing when the rod R2 moves. Therefore, the driven body J05 is stably driven.

Furthermore, since the detecting device RN3 includes the link mechanism RNK that can reduce the deflection angle of the rod R2 about the fulcrum PP and the detecting device 203 that is connected to the link mechanism RNK, the deflection of the reciprocation of the driven body J05 of the detecting device 203 is small when the rod R2 reciprocates. For this reason, since it is possible to reduce the variation of the interval between the movable magnet 22 and the detecting means 13 when the rod R2 reciprocates, it is possible to suppress the deterioration of the detection accuracy of the detecting means 13 that is caused by an influence of the deflection of reciprocation. Therefore, it is possible to provide the detecting device RN3 with the link mechanism of which the deterioration of the detection accuracy has been suppressed.

Moreover, since the detecting means 13 detects the degree of the operation of the movable magnet 22 in two directions, that is, the reciprocation direction and the interval direction, it is possible to more accurately detect the operation of the movable magnet 22. Therefore, it is possible to improve the position-detection accuracy of the detecting device 203.

Further, since the partition wall is provided between the movable magnet 22 and the detecting means 13, the space in which the movable magnet 22 is disposed and the space in which the detecting means 13 is disposed are isolated from each other. Accordingly, even though an environmental change occurs in the space in which the rod R2 is disposed, it is possible to reduce an influence on the detecting means 13.

Meanwhile, the invention is not limited to the above-mentioned embodiments. For example, the invention can be modified and embodied as described below, and these embodiments are also included in the scope of the invention.

### Modification 1

A thrust bearing has been suitably used as the support S4 in the first embodiment, but the invention is not limited thereto.

### Modification 2

The diaphragm D6 and the biasing member F6 have been used as the drive unit (16, 26) that moves the movable magnet (12, 22) in the second and third embodiments, but the drive unit is not limited thereto. Any means for moving the movable magnet (12, 22) may be used as the drive unit.

The invention is not limited to the above-mentioned embodiments, and may be appropriately modified without departing from the scope of the invention.

It should be understood by those skilled in the art that various modifications, combinations, sub-combinations and alterations may occur depending on design requirements and other factors insofar as they are within the scope of the appended claims of the equivalents thereof.

## Claims

1. A mounting structure comprising:
a lever (L1) that includes an oscillation shaft (Y6) at one end (L1a) thereof and oscillates in a predetermined oscillating angle range;
a rod (R2) of which one end (R2a) is engaged with a driven body (J05); and
a support (S4) that is disposed on an intermediate portion of the rod (R2) and supports the rod (R2) so as to allow the rod (R2) to reciprocate,
wherein the other end (L1z) of the lever (L1) and the other end (R2z) of the rod (R2) are movably connected to each other by a connecting shaft (G3) that is spaced apart from the oscillation shaft (Y6) by a predetermined distance,
an arc endpoint of an arc, which is drawn by the connecting shaft (G3) with the oscillation of the lever (L1), close to the support (S4) is defined as a first arc endpoint (GA1) and an arc endpoint of the arc distant from the support (S4) is defined as a second arc endpoint (GA2),
a line segment connecting the oscillation shaft (Y6) with the connecting shaft (G3) is defined as a lever axis,
when a line extending toward the lever axis from a fulcrum (PP) serving as a support center of the support (S4) means an oscillating angle of the lever (L1) corresponding to a line perpendicular to the lever axis, the line perpendicular to the lever axis is defined as a perpendicular line segment (VL) and the lever axis is defined as a lever line segment (LJM),
a connection point between the lever line segment (LJM) and the arc is defined as an arc intermediate point (GA3),
a line connecting the fulcrum (PP) with the arc intermediate point (GA3) is defined as an intermediate line (PG3), a line connecting the fulcrum (PP) with the first arc endpoint (GA1) is defined as a first line segment (PG1), and a line connecting the fulcrum (PP) with the second arc endpoint (GA2) is defined as a second line segment (PG2),
an angle between the intermediate line (PG3) and the perpendicular line segment (VL) is defined as an intermediate angle (AN3), an angle formed between the first line segment (PG1) and the perpendicular line segment (VL) is defined as a first angle (AN1), and an angle between the second line segment (PG2) and the perpendicular line segment (VL) is defined as a second angle (AN2), and the mounting structure being **characterised in that**
the lever (L1) and the rod (R2) are connected to each other so that the intermediate angle (AN3) is equal to or greater than a larger one of the first angle (AN1) and the second angle (AN2).

2. The mounting structure according to Claim 1,
wherein the support (S4) is a thrust bearing.

3. A detecting device with a link mechanism comprising:
a link mechanism (RNK) that includes the mounting structure according to Claim 1 or 2; and
a detecting device that is connected to the link mechanism (RNK),
wherein the detecting device includes the driven body (J05) that reciprocates together with the rod (R2) of the link mechanism (RNK), a movable magnet (22) that reciprocates together with the driven body (J05), and detecting means (13) for detecting an operation of the movable magnet (22).

4. The detecting device with a link mechanism according to Claim 3,
wherein the detecting means (13) detects a degree of an operation of the movable magnet (22) in a reciprocation direction of the movable magnet (22) and an interval direction between the detecting means (13) and the movable magnet (22).

5. The detecting device with a link mechanism according to Claim 3 or 4,
wherein a partition wall is provided between the movable magnet (22) and the detecting means (13).

6. A position detecting device to which a link mechanism including the mounting structure according to Claim 1 or 2 is connected, the position detecting device comprising:
the driven body (J05) that is engaged with the rod (R2) of the link mechanism (RNK) and reciprocates together with the rod (R2);
a movable magnet (12) that operates together with the driven body (J05); and
detecting means (13) for detecting an operation of the movable magnet (12).

7. The position detecting device according to Claim 6, wherein an interval between the movable magnet (12) and the detecting means (13) is changed with the reciprocation of the movable magnet (12), and
the detecting means (13) is disposed at a position where an interval between a position of the movable magnet (12) corresponding to a larger one of the first and second angles (AN1 and AN2) and the detecting means (13) is the same as an interval between the position of a movable magnet (12) corresponding to the intermediate angle (AN3) and the detecting means (13).

8. The position detecting device according to Claim 6 or 7,
wherein the detecting means (13) detects a degree of an operation of the movable magnet (12) in a reciprocation direction of the movable magnet (12) and an interval direction between the detecting means (13) and the movable magnet (12).

9. The position detecting device according to any one of Claims 6 to 8,
wherein a partition wall is provided between the movable magnet (12) and the detecting means (13).

## Patentansprüche

1. Befestigungskonstruktion, die Folgendes aufweist:
einen Hebel (L1), der eine Schwingungswelle (Y6) an seinem einen Ende (L1a) aufweist und in einem vorbestimmten Schwingungswinkelbereich schwingt;
eine Stange (R2), die mit ihrem einen Ende (R2a) mit einem angetriebenen Körper (J05) zusammenwirkt; und
einen Träger (S4), der auf einem zwischengeordneten Bereich der Stange (R2) angeordnet ist und die Stange (R2) derart abstützt, dass sich die Stange (R2) hin- und herbewegen kann,
wobei das andere Ende (L1z) des Hebels (L1) und das andere Ende (R2z) der Stange (R2) durch eine Verbindungswelle (G3) beweglich miteinander verbunden sind, die von der Schwingungswelle (Y6) über einen vorbestimmten Abstand beabstandet ist,
wobei ein Kreisbogen-Endpunkt eines Kreisbogens, der von der Verbindungswelle (G3) bei der Schwingung des Hebels (L1) gezogen wird, in der Nähe des Trägers (S4) als erster Kreisbogen-Endpunkt (GA1) definiert ist und ein von dem Träger (S4) entfernter Kreisbogen-Endpunkt des Kreisbogens als zweiter Kreisbogen-Endpunkt (GA2) definiert ist,
wobei ein die Schwingungswelle (Y6) mit der Verbindungswelle (G3) verbindendes Liniensegment als Hebelachse definiert ist,
wobei dann, wenn unter einer Linie, die sich von einem als Abstützzentrum des Trägers (S4) dienenden Drehpunkt (PP) in Richtung auf die Hebelachse erstreckt, ein Schwingungswinkel des Hebels (L1) zu verstehen ist, der einer zu der Hebelachse rechtwinkligen Linie entspricht, die zu der Hebelachse rechtwinklige Linie als rechtwinkliges Liniensegment (VL) definiert ist und die Hebelachse als Hebel-Liniensegment (LJM) definiert ist,
wobei ein Verbindungspunkt zwischen dem Hebel-Liniensegment (LJM) und dem Kreisbogen als Kreisbogen-Zwischenpunkt (GA3) definiert ist,
wobei eine Linie, die den Drehpunkt (PP) mit dem Kreisbogen-Zwischenpunkt (GA3) verbindet, als Zwischen-Linie (PG3) definiert ist, eine Linie, die den Drehpunkt (PP) mit dem ersten Kreisbogen-Endpunkt (GA1) verbindet, als erstes Liniensegment (PG1) definiert ist und eine Linie, die den Drehpunkt (PP) mit dem zweiten Kreisbogen-Endpunkt (GA2) verbindet, als zweites Liniensegment (PG2) definiert ist,
wobei ein Winkel zwischen der zwischengeordneten Linie (PG3) und dem rechtwinkligen Liniensegment (VL) als Zwischen-Winkel (AN3) definiert ist,
ein zwischen dem ersten Liniensegment (PG1) und dem rechtwinkligen Liniensegment (VL) gebildeter Winkel als erster Winkel (AN1) definiert ist und ein Winkel zwischen dem zweiten Liniensegment (PG2) und dem rechtwinkligen Liniensegment (VL) als zweiter Winkel (AN2) definiert ist,
wobei die Befestigungskonstruktion **dadurch gekennzeichnet ist,**
**dass** der Hebel (L1) und die Stange (R2) derart miteinander verbunden sind, dass der Zwischen-Winkel (AN3) gleich oder größer als ein größerer von dem ersten Winkel (AN1) und dem zweiten Winkel (AN2) ist.

2. Befestigungskonstruktion nach Anspruch 1,
wobei der Träger (S4) ein Axiallager ist.

3. Erfassungsvorrichtung mit einem Verbindungsmechanismus, aufweisend:
einen Verbindungsmechanismus (RNK), der die Befestigungskonstruktion nach Anspruch 1 oder 2 aufweist; und
eine Erfassungsvorrichtung, die mit dem Verbindungsmechanismus (RNK) verbunden ist,
wobei die Erfassungsvorrichtung den angetriebenen Körper (J05), der sich zusammen mit der Stange (R2) des Verbindungsmechanismus (RNK) hin und her bewegt, einen beweglichen Magneten (22), der sich zusammen mit dem angetriebenen Körper (J05) hin und her bewegt, sowie eine Erfassungseinrichtung (13) zum Erfassen eines Betätigungsvorgangs des beweglichen Magneten (22) beinhaltet.

4. Erfassungsvorrichtung mit einem Verbindungsmechanismus nach Anspruch 3,
wobei die Erfassungseinrichtung (13) ein Ausmaß eines Betätigungsvorgangs des beweglichen Magneten (22) in einer Hin- und Herbewegungsrichtung des beweglichen Magneten (22) und einer Abstandsrichtung zwischen der Erfassungseinrichtung (13) und dem beweglichen Magneten (22) erfasst.

5. Erfassungsvorrichtung mit einem Verbindungsmechanismus nach Anspruch 3 oder 4,
wobei eine Trennwand zwischen dem beweglichen Magneten (22) und der Erfassungseinrichtung (13) vorgesehen ist.

6. Positionserfassungsvorrichtung, mit der ein Verbindungsmechanismus verbunden ist, die die Befestigungskonstruktion nach Anspruch 1 oder 2 beinhaltet, wobei die Positionserfassungsvorrichtung Folgendes aufweist:
den angetriebenen Körper (J05), der mit der Stange (R2) des Verbindungsmechanismus (RNK) zusammenwirkt und sich zusammen mit der Stange (R2) hin und her bewegt;
einen beweglichen Magneten (12), der zusammen mit dem angetriebenen Körper (J05) arbeitet; und
eine Erfassungseinrichtung (13) zum Erfassen eines Betätigungsvorgangs des beweglichen Magneten (12).

7. Positionserfassungsvorrichtung nach Anspruch 6,
wobei ein Abstand zwischen dem beweglichen Magneten (12) und der Erfassungseinrichtung (13) mit der Hin- und Herbewegung des beweglichen Magneten (12) verändert wird, und
wobei die Erfassungseinrichtung (13) in einer Position angeordnet ist, in der ein Abstand zwischen einer Position des beweglichen Magneten (12), die einem größeren von dem ersten und dem zweiten Winkel (AN1 und AN2) entspricht, und der Erfassungseinrichtung (13) der gleiche ist wie ein Abstand zwischen der dem Zwischen-Winkel (AN3) entsprechenden Position eines beweglichen Magneten (12) und der Erfassungseinrichtung (13).

8. Positionserfassungsvorrichtung nach Anspruch 6 oder 7,
wobei die Erfassungseinrichtung (13) ein Ausmaß eines Betätigungsvorgangs des beweglichen Magneten (12) in einer Hin- und Herbewegungsrichtung des beweglichen Magneten (12) und einer Abstandsrichtung zwischen der Erfassungseinrichtung (13) und dem beweglichen Magneten (12) erfasst.

9. Positionserfassungsvorrichtung nach einem der Ansprüche 6 bis 8,
wobei eine Trennwand zwischen dem beweglichen Magneten (12) und der Erfassungseinrichtung (13) vorgesehen ist.

## Revendications

1. Structure de montage comprenant :
un levier (L1) qui comprend un arbre d'oscillation (Y6) à une extrémité (L1a) de celui-ci et qui oscille dans une plage angulaire d'oscillation prédéterminée ;
une tige (R2) dont une extrémité (R2a) est en prise avec un corps entraîné (J05) ; et
un support (S4) qui est placé sur une partie intermédiaire de la tige (R2) et qui supporte la tige (R2) de manière à permettre à la tige (R2) de suivre un mouvement alternatif,
dans laquelle l'autre extrémité (L1z) du levier (L1) et l'autre extrémité (R2z) de la tige (R2) sont reliées de façon mobile l'une à l'autre par un arbre de connexion (G3) qui est espacé de l'arbre d'oscillation (Y6) d'une distance prédéterminée,
un point limite d'arc d'un arc, qui est dessiné par l'arbre de connexion (G3) avec l'oscillation du levier (L1), près du support (S4), est défini en tant que premier point limite d'arc (GA1) et un point limite d'arc de l'arc distant du support (S4) est défini en tant que deuxième point limite d'arc (GA2),
un segment de droite reliant l'arbre d'oscillation (Y6) à l'arbre de connexion (G3) est défini comme axe de levier,
quand une droite s'étendant vers l'axe de levier depuis un sommet (PP) servant de centre de support du support (S4) représente un angle d'oscillation du levier (L1) correspondant à une droite perpendiculaire à l'axe de levier, la droite perpendiculaire à l'axe de levier est définie en tant que segment de droite perpendiculaire (VL) et l'axe de levier est défini en tant que segment de droite se levier (LJM),
un point de connexion entre le segment de droite se levier (LJM) et l'arc est défini en tant que point intermédiaire d'arc (GA3),
une droite reliant le sommet (PP) au point intermédiaire d'arc (GA3) est définie en tant que droite intermédiaire (PG3), une droite reliant le sommet (PP) au premier point limite d'arc (GA1) est définie en tant que premier segment de droite (PG1), et une droite reliant le sommet (PP) au deuxième point limite d'arc (GA2) est définie en tant que deuxième segment de droite (PG2),
un angle formé entre la droite intermédiaire (PG3) et le segment de droite perpendiculaire (VL) est défini en tant qu'angle intermédiaire (AN3), un angle formé entre le premier segment de droite (PG1) et le segment de droite perpendiculaire (VL) est défini en tant que premier angle (AN1), et un angle formé entre le deuxième segment de droite (PG2) et le segment de droite perpendiculaire (VL) est défini en tant que deuxième angle (AN2), et
la structure de montage étant **caractérisée en ce que** le levier (L1) et la tige (R2) sont connectés entre eux de manière telle que l'angle intermédiaire (AN3) est supérieur ou égal au plus grand angle parmi le premier angle (AN1) et le deuxième angle (AN2).

2. Structure de montage selon la revendication 1, dans laquelle le support (S4) est un palier de butée.

3. Dispositif de détection muni d'un mécanisme de liaison comprenant :
un mécanisme de liaison (RNK) qui comprend la structure de montage selon la revendication 1 ou 2 ; et
un dispositif de détection qui est connecté au mécanisme de liaison (RNK),
dans lequel le dispositif de détection comprend le corps entraîné (J05) qui suit un mouvement alternatif avec la tige (R2) du mécanisme de liaison (RNK), un aimant mobile (22) qui suit un mouvement alternatif avec le corps entraîné (J05), et un moyen de détection (13) pour détecter un fonctionnement de l'aimant mobile (22).

4. Dispositif de détection muni d'un mécanisme de liaison selon la revendication 3, dans lequel le moyen de détection (13) détecte un degré d'un fonctionnement de l'aimant mobile (22) dans une direction de va-et-vient de l'aimant mobile (22) et une direction d'intervalle entre le moyen de détection (13) et l'aimant mobile (22).

5. Dispositif de détection muni d'un mécanisme de liaison selon la revendication 3 ou 4, dans lequel une paroi de séparation est placée entre l'aimant mobile (22) et le moyen de détection (13).

6. Dispositif de détection de position auquel est connecté un mécanisme de liaison comprenant la structure de montage selon la revendication 1 ou 2, le dispositif de détection de position comprenant :
le corps entraîné (J05) qui est en prise avec la tige (R2) du mécanisme de liaison (RNK) et qui suit un mouvement alternatif avec la tige (R2) ;
un aimant mobile (12) qui fonctionne avec le corps entraîné (J05) ; et
un moyen de détection (13) pour détecter un fonctionnement de l'aimant mobile (12).

7. Dispositif de détection de position selon la revendication 6,
dans lequel un intervalle entre l'aimant mobile (12) et le moyen de détection (13) est modifié par le mouvement alternatif de l'aimant mobile (12), et
le moyen de détection (13) est placé en une position où un intervalle entre une position de l'aimant mobile (12) correspondant à un plus grand des premier et deuxième angles (AN1 et AN2) et le moyen de détection (13) est égal à l'intervalle entre la position d'un aimant mobile (12) correspondant à l'angle intermédiaire (AN3) et le moyen de détection (13).

8. Dispositif de détection de position selon la revendication 6 ou 7, dans lequel le moyen de détection (13) détecte un degré d'un fonctionnement de l'aimant mobile (12) dans une direction de va-et-vient de l'aimant mobile (12) et une direction d'intervalle entre le moyen de détection (13) et l'aimant mobile (12).

9. Dispositif de détection de position selon l'une quelconque des revendications 6 à 8, dans lequel une paroi de séparation est placée entre l'aimant mobile (12) et le moyen de détection (13).
